(19) Europäisches Patentamt / European Patent Office / Office européen des brevets

(11) **EP 3 373 644 A1**

(12) **EUROPEAN PATENT APPLICATION**
published in accordance with Art. 153(4) EPC

(43) Date of publication:
**12.09.2018 Bulletin 2018/37**

(21) Application number: **16862151.4**

(22) Date of filing: **02.11.2016**

(51) Int Cl.:
***H04W 28/06*** (2009.01)

(86) International application number:
**PCT/JP2016/082654**

(87) International publication number:
**WO 2017/078091 (11.05.2017 Gazette 2017/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.11.2015 JP 2015217959**

(71) Applicant: **NTT DOCOMO, INC.**
**Chiyoda-ku**
**Tokyo 100-6150 (JP)**

(72) Inventors:
• **TAKAHASHI, Hideaki**
  **Tokyo 100-6150 (JP)**
• **HAPSARI, Wuri Andarmawanti**
  **Tokyo 100-6150 (JP)**
• **TAKEDA, Kazuaki**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **USER DEVICE, WIRELESS BASE STATION, AND WIRELESS COMMUNICATION METHOD**

(57) An object is to provide a user device, a radio base station, and a radio communication method that are capable of extending a predetermined number of spare bits included in notification information such as MIB to be utilized for a plurality of purposes. The user device determines contents of the notification information. The notification information includes a frame (310) having a plurality of slots (410) and a frame (320) having a plurality of slots (420) to each of which system information of a same type is assigned. The system information includes spare bits (500) of 10 bits. The spare bits assigned to the slot (410) are used for a first purpose, and the spare bits assigned to the slot (420) are used for a second purpose that is different from the first purpose.

FIG. 6

EP 3 373 644 A1

**Description**

TECHNICAL FIELD

The present invention relates to a user device that receives notification information repeatedly transmitted at a predetermined cycle from a radio base station, the radio base station, and a radio communication method.

BACKGROUND ART

3rd Generation Partnership Project (3GPP) specifies Long Term Evolution (LTE), and with the aim of further speeding, specifies the LTE including LTE-Advanced (hereinbelow, the LTE includes the LTE-Advanced).
In the LTE, system information (SI) such as a system bandwidth used in a radio communication system is broadcasted from a radio base station (eNB) to a plurality of user devices (User Equipment, UE).
Specifically, the system information is repeatedly transmitted from the eNB to the UE at a predetermined cycle by using Master Information Block (MIB) and System Information Block (SIB). The MIB includes system information such as a system bandwidth, a system frame number (SFN), and the number of transmitting antennas.
A UE located within a cell formed by the eNB must receive the MIB at or above a certain reception quality. Accordingly, in the MIB repeatedly transmitted at a predetermined cycle of 40 milliseconds (ms), system information of a same type is included in a plurality of slots (specifically, in 4 slots (subframe) each of which is transmitted per 10 ms) .
In this manner, a UE located near the eNB receives the system information of any of the slots, making it possible to receive the MIB in a shorter time. Moreover, the UE located at the cell edge can receive the MIB at or above a certain reception quality by software mixing the system information received from the plurality of the slots.
In LTE Release-13, utilization of spare bits of MIB for the user device for Machine Type Communication (MTC-UE) is being studied (for example, refer to Non-Patent Document 1). Specifically, utilization of the spare bits to notify whether the eNB supports reception of 6RB (resource block) or not and the like is being studied. Furthermore, because the SIB for MTC-UE is transmitted without using PDCCH (Physical Downlink Control Channel), the information mentioned above must be notified in advance.
Because the spare bits of the MIB are limited to 10 bits, a method that can effectively utilize these spare bits is being studied. For example, if the first bit of the spare bits is "1", utilization of the remaining 9 bits for the system information for MTC-UE such as explained above is being studied (for example, refer to Non-Patent Document 2).

Moreover, in such a method of utilizing the spare bits, it is proposed that if the first bit is "0" and the next bit is "1", the remaining 8 bits are to be used for other enhancements.

PRIOR ART DOCUMENT

NON-PATENT DOCUMENT

   [Non-Patent Document 1] 3GPP RP-150492 "Further LTE Physical Layer Enhancements for MTC", 3GPP, March 2015
   [Non-Patent Document 2] 3GPP R2-154785 "MIB for Rel-13 low complexity and coverage enhanced UEs", 3GPP, October 2015.

SUMMARY OF THE INVENTION

In the above method of utilizing the spare bits of the MIB, the spare bits can only be utilized for one purpose (for example, for transmitting the system information for MTC-UE), and cannot be utilized for a plurality of purposes. For example, utilizing spare bits of the MIB also for extended DRX cycle is being studied.
The present invention has been made in view of the above circumstances. It is an object of the present invention to provide a user device, a radio base station, and a radio communication method that can extend the predetermined number of spare bits included in notification information such as the MIB to be utilized for a plurality of purposes.
A user device according to one aspect of the present invention performs radio communication with a radio base station based on notification information transmitted from the radio base station. The user device includes a notification information receiving unit that receives the notification information repeatedly transmitted from the radio base station at a predetermined cycle; and a notification information determining unit that determines contents of the notification information received by the notification information receiving unit.
The notification information includes a first frame having a plurality of first slots to which system information of a same type used to perform the radio communication is assigned, and a second frame that is transmitted after the first frame and has a plurality of second slots to which the system information is assigned. The first frame and the second frame are transmitted at the predetermined cycle, and the system information includes a predetermined number of spare bits.
The spare bits assigned to the first slot are used for a first purpose, and the spare bits assigned to the second slot are used for a second purpose that is different from the first purpose. The notification information determining unit determines contents of the spare bits assigned to the first slot and the contents of the spare bits assigned to the second slot.

A radio base station according to another aspect of the present invention transmits to a user device notification information repeatedly transmitted at a predetermined cycle. The radio base station includes a notification information transmitting unit that transmits to the user device the notification information. The notification information includes a first frame having a plurality of first slots to which system information of a same type used to perform radio communication is assigned, and a second frame that is transmitted after the first frame and has a plurality of second slots to which the system information is assigned. The first frame and the second frame are transmitted at the predetermined cycle, and the system information includes a predetermined number of spare bits. The spare bits assigned to the first slot are used for a first purpose, and the spare bits assigned to the second slot are used for a second purpose that is different from the first purpose.

A radio communication method according to still another aspect of the present invention is used in a radio communication system that includes a user device and a radio base station. The radio communication method includes transmitting in which the radio base station repeatedly transmits notification information at a predetermined cycle; and receiving in which the user device receives the notification information.

The notification information includes a first frame having a plurality of first slots to which system information of a same type used to perform radio communication is assigned, and a second frame that is transmitted after the first frame, and has a plurality of second slots to which the system information has been assigned. The first frame and the second frame are transmitted at the predetermined cycle, and the system information includes a predetermined number of spare bits. The spare bits assigned to the first slot are used for a first purpose, and the spare bits assigned to the second slot are used for a second purpose which is different from the first purpose.

BRIEF DESCRIPTION OF DRAWINGS

FIG. 1 is an overall structural diagram of a radio communication system 10.
FIG. 2 is a functional block diagram of eNB 100.
FIG. 3 is a functional block diagram of UE 200.
FIG. 4 shows a sequence of notifying the UE 200 of notification information transmitted from the eNB 100.
FIG. 5 shows a configuration example of MIB.
FIGS. 6(a) and 6(b) show examples of a frame configuration of the MIB.

MODES FOR CARRYING OUT THE INVENTION

Exemplary embodiments of the present invention are explained below with reference to the accompanying drawings. In the drawings, structural elements having the same function or configuration are indicated by the same or similar reference numerals and the explanation thereof is appropriately omitted.

(1) Overall Structural Configuration of Radio Communication System

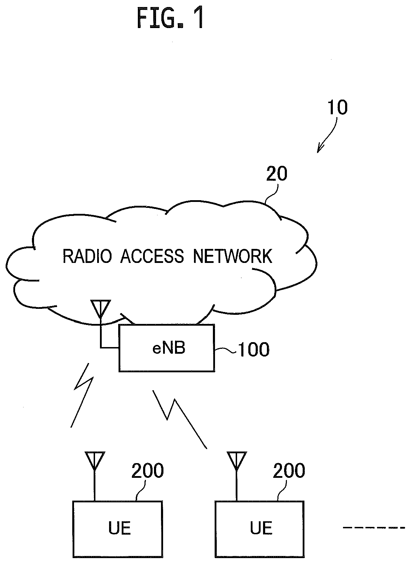

FIG. 1 is an overall structural diagram of a radio communication system 10 according to the present embodiment. The radio communication system 10 is a radio communication system using the Long Term Evolution (LTE), and includes a radio access network 20 and a mobile station 200 (hereinafter, "UE 200").

The radio access network 20 is Evolved Universal Terrestrial Radio Access Network (E-UTRAN) stipulated in the 3GPP, and includes a radio base station 100 (hereinafter, "eNB 100"). The radio communication system 10 is not necessarily limited to the LTE (E-UTRAN). For example, the radio access network 20 can be a radio access network that includes a radio base station that executes radio communication with the UE 200 (user device) defined as 5G.

The eNB 100 and the UE 200 perform LTE radio communication. In the present embodiment, in particular, the eNB 100 transmits to a plurality of the UEs 200 Master Information Block (MIB) and System Information Block (SIB) via broadcast. Spare bits of the predetermined number (10 bits) are included in the MIB.

The UE 200 receives the MIB and the SIB (notification information) transmitted by the eNB 100, and performs, based on the received notification information, radio communication with the eNB 100. The type of the UE 200 is not particularly limited, and can be a user device (MTC-UE) that performs Machine Type Communication (MTC).

(2) Functional Block Configuration of Radio Communication System

A functional block configuration of the radio communication system 10 is explained below. Specifically, functional block configurations of the eNB 100 and the UE 200 are explained below.

(2.1) eNB 100

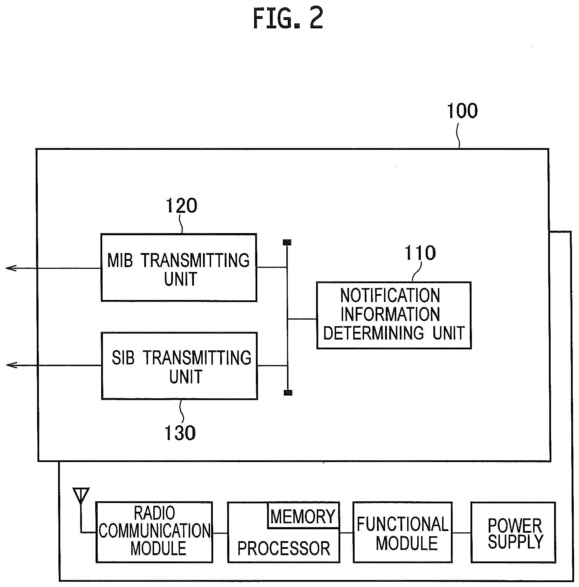

FIG. 2 is a functional block diagram of the eNB 100. As shown in FIG. 2, the eNB 100 includes a notification information determining unit 110, MIB transmitting unit 120, and SIB transmitting unit 130.

Furthermore, as shown in FIG. 2, each functional block of the eNB 100 is implemented by hardware elements such as a radio communication module, a processor (including a memory), a functional module (a network IF and the like), and a power supply.

The notification information determining unit 110 determines contents of the notification information to be transmitted to the plurality of the UEs 200. Specifically, the notification information determining unit 110 determines contents of the MIB and the SIB.

In the present embodiment, in particular, the notification information determining unit 110 determines the contents of the notification information, specifically, the system information, to be transmitted by using the spare bits of the MIB.

For example, the notification information determining unit 110 determines to transmit the system information for the MTC-UE by using the spare bits, or to transmit the system information related to extended DRX cycle (refer to RP-150493) by using the spare bits.

The MIB transmitting unit 120 transmits the MIB determined by the notification information determining unit 110 to the UEs 200. In the present embodiment, the MIB transmitting unit 120 constitutes a notification information transmitting unit.

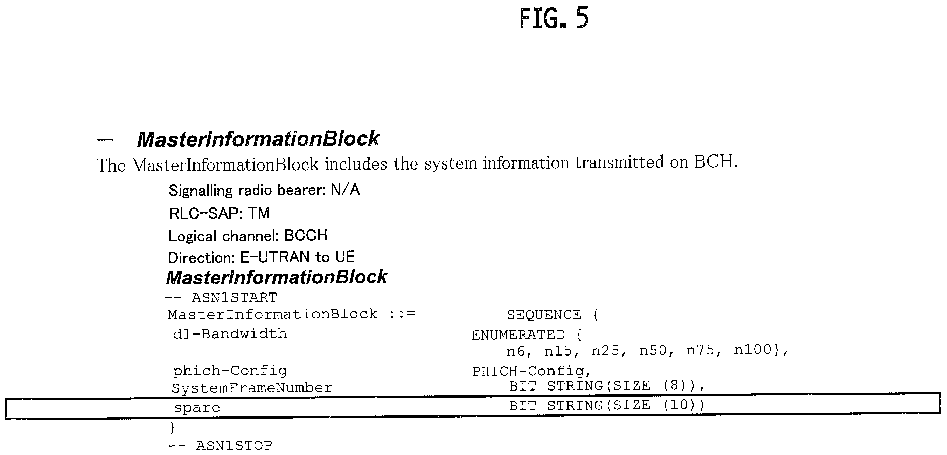

FIG. 5 shows a configuration example of the MIB. The configuration of the MIB is stipulated in 3GPP TS 36.331. As shown in FIG. 5, the MIB includes a system bandwidth, a system frame number, the number of transmitting antennas, spare bits (enclosed with a frame), and the like.

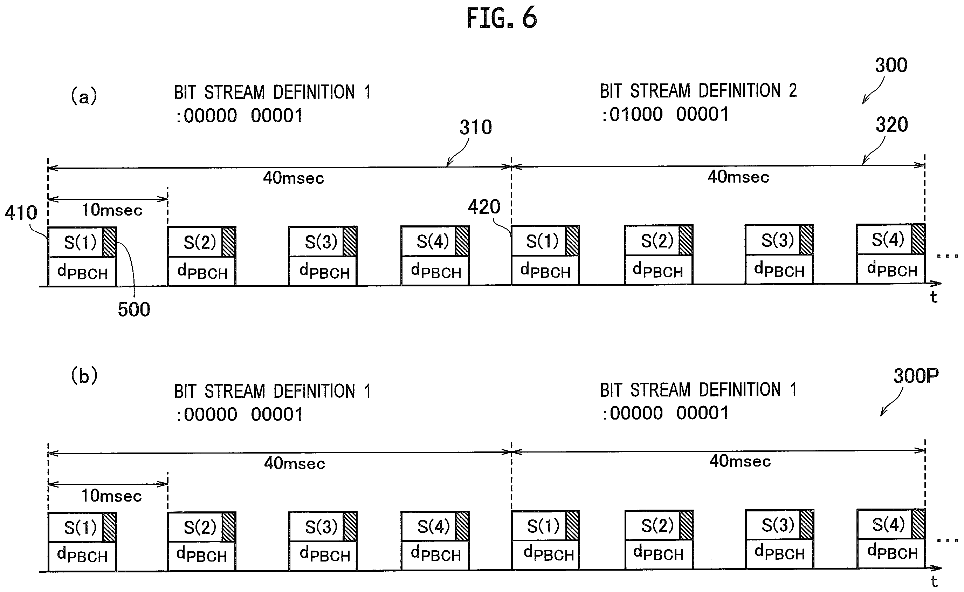

FIGS. 6(a) and 6(b) show examples of a frame configuration of the MIB. Specifically, FIG. 6(a) shows a configuration example of MIB 300 when the spare bits are extended for utilization, and FIG. 6(b) shows a configuration example of MIB 300P when the spare bits are not extended for utilization.

As shown in FIGS. 6(a) and 6(b), the MIB 300 and the MIB 300P include a frame 310 (a first frame) and a frame 320 (a second frame). The frame 310 and the frame 320 are respectively repeatedly transmitted at a frequency of 40 ms (a predetermined cycle). In other words, each of the frame 310 and the frame 320 is repeatedly transmitted at the predetermined cycle.

The frame 310 includes a plurality (four) of slots 410 (a first slot). Similarly, the frame 320 includes a plurality (four) of slots 420 (a second slot) . One slot among the slots 410 and the slots 420 is transmitted every 10 ms via PBCH (Physical Broadcast Channel).

System information of a same type used to perform the radio communication such as the system bandwidth is assigned to each of the slots 410. Similarly, system information of a same type is assigned to each of the slots 420.

Accordingly, the UE 200 located near the eNB 100 receives the system information assigned to any of the slots, making it possible to receive the MIB in a shorter time. Moreover, the UE 200 located on the cell edge can receive the MIB at or above a certain reception quality by software mixing the system information received from the plurality of the slots .

Each system information (MIB) assigned to the slot 410 and the slot 420 includes spare bits 500 of 10 bits as explained above. Furthermore, FIGS. 6(a) and 6(b) schematically show the spare bits 500.

As shown in FIG. 6(a), in the MIB 300, the spare bits 500 assigned to the slot 410 are utilized for a first purpose. For example, those spare bits 500 are utilized for transmitting the system information for the MTC-UE. On the other hand, the spare bits 500 assigned to the slot 420 are utilized for a second purpose that is different from the first purpose. For example, those spare bits 500 are utilized for transmitting the system information related to the extended DRX cycle.

Specifically, as shown in FIG. 6(a), "00000 00001" is defined (Definition 1: System information for the MTC-UE) in a bit stream of the spare bits 500 included in each of the slots 410 of the frame 310. On the other hand, "01000 00001" is defined (Definition 2: System information related to the extended DRX cycle) in a bit stream of the spare bits 500 included in each of the slots 420 of the frame 320.

In this manner, in the present embodiment, the utilization (purpose) of the spare bits 500 changes at each frequency (40 ms) of the MIB, thereby changing the meaning of the spare bits 500 at each predetermined cycle. By repeatedly transmitting the spare bits 500 defined in each of the definitions 1 and 2, a total of 20 bits of information becomes available for utilization.

Furthermore, even if the configuration example of the MIB 300 shown in FIG. 6(a) depicts that the spare bits 500 are extended to 20 bits, it is also possible to increase the definitions per frame (predetermined cycle) and extend the spare bits to a larger number of bits.

In such a case, MIB of which definition i among definitions 1 to N ($1 \leq i \leq N$) is to be transmitted in one SFN (System Frame Number) (10 ms) can be obtained by the following formula:

$$i = \text{floor}(SFN/4) \bmod N$$

On the other hand, in the MIB 300P, the definition of the bit streams of the spare bits 500 in both the slot 410 and the slot 420 is "00000 00001" (Definition 1) and the spare bits 500 are used for a single purpose.

The SIB transmitting unit 130 transmits to the UEs 200 the SIB determined by the notification information determining unit 110.

(2.2) UE 200

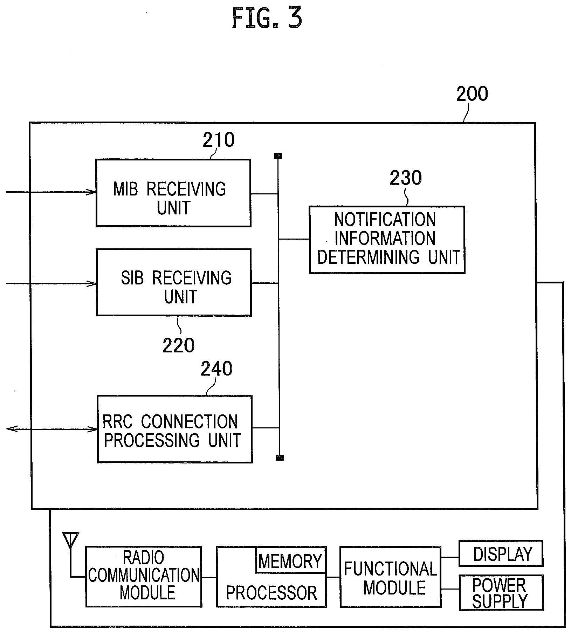

FIG. 3 is a functional block diagram of the UE 200. As shown in FIG. 3, the UE 200 includes MIB receiving unit 210, SIB receiving unit 220, a notification information determining unit 230, and RRC connection processing unit 240.

Furthermore, as shown in FIG. 3, each functional block of the UE 200 is implemented by hardware elements such as a radio communication module, a processor (including a memory), a functional module (an external connection IF, position detection, various measurements, and the like), a display, and a power supply (such as a battery).

The MIB receiving unit 210 receives the MIB repeatedly transmitted from the eNB 100 at the predetermined cycle (40 ms). In the present embodiment, the MIB receiving unit 210 constitutes a notification information receiving unit.

The SIB receiving unit 220 receives the SIB repeatedly transmitted from the eNB 100. Specifically, the SIB receiving unit 220 sets a reception environment of the UE 200 based on the system information included in the MIB received by the MIB receiving unit 210, and receives the SIB.

The notification information determining unit 230 determines the contents of the notification information received by the MIB receiving unit 210. Specifically, the notification information determining unit 230 determines the contents of the MIB (including the spare bits) and the SIB.

Moreover, the notification information determining unit 230 determines, even if the contents of the system information included in each of the slots 410 and the contents of the system information included in each of the slots 420 of the MIB 300 (refer to FIG. 6(a)) are different, that the MIB is not updated. In other words, in the notification information determining unit 230, change of the bit stream pattern of the system information (SI) at each predetermined cycle (40 ms) is not considered as change in the contents of the MIB, and therefore SI update procedure is not executed for such MIBs.

On the other hand, when the contents of the system information included in the plurality of the slots 410 that constitute the same frame 310 or the contents of the system information included in the plurality of the slots 420 that constitute the same frame 320 are changed, the notification information determining unit 230 determines that the system information is updated. In other words, in the notification information determining unit 230, only when the bit value (contents of the parameter implied by the bit) is changed among the bit streams having the same definition, the MIB contents are considered to be changed, and the SI update procedure is executed.

The RRC connection processing unit 240 executes, based on the MIB (including the spare bits) received by the MIB receiving unit 210 and the SIB received by the SIB receiving unit 220, settings of such as RRC connection with the eNB 100, and the like.

(3) Operation of Radio Communication System

Operation of the radio communication system 10 is explained below. Specifically, the transmitting and receiving operations of the MIB and the SIB are explained below.

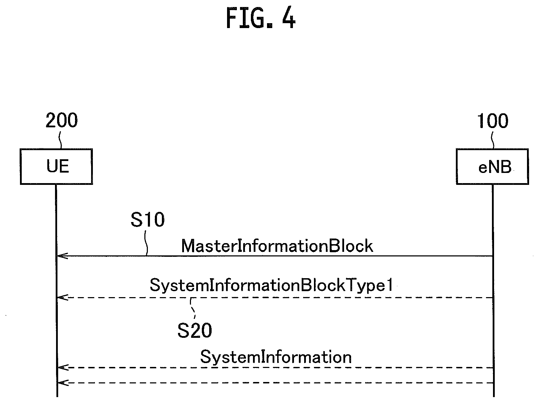

FIG. 4 shows a sequence of notifying the notification information transmitted from the eNB 100 to the UE 200. As shown in FIG. 4, the eNB 100 first transmits MIB (S10). As explained above, the spare bits 500 are included in the MIB 300 (refer to FIG. 6(a)) and are used for a plurality of purposes.

After transmitting the MIB, the eNB 100 transmits the System Information Block (SIB) (S20). Various types of SIB are stipulated, and the eNB 100 transmits SIBs sequentially, starting from SIB Type 1 (SIB1).

(4) Effects and Advantages

According to the embodiments explained above, the following operational effects can be obtained. According to the MIB 300 used in the radio communication system 10, the spare bits 500 assigned to each of the slots 410 are used for the first purpose, such as transmitting the system information for the MTC-UE. On the other hand, the spare bits 500 assigned to each of the slots 420 are used for the second purpose that is different from the first purpose, such as transmitting the system information related to the extended DRX cycle.

Accordingly, the spare bits 500 of 10 bits included in the MIB can be extended so as to be utilized for the plurality of purposes. Particularly, when the first bit of the spare bits 500 explained above is "1", the remaining 9 bits can be simultaneously used for only one purpose (for example, for transmitting the system information for the MTC-UE) in the method where the spare bits are utilized for transmitting the system information for the MTC-UE, but according to the MIB 300 according to the present embodiment, the spare bits 500 can be simultaneously used for the plurality of purposes.

Furthermore, by repeatedly transmitting the spare bits 500 of each of the definition 1 and the definition 2, a total of 20 bits of information becomes available for utilization, making it possible to increase the number of the virtual spare bits.

In the present embodiment, change of the bit stream pattern of the system information (SI) at each predetermined cycle (40 ms) is not considered as change in the contents of the MIB, and therefore the SI update procedure is not executed for such MIBs. Therefore, when the spare bits 500 are utilized for the plurality of purposes (definitions), even if the contents of the system information (spare bits 500) in the frame 310 and the frame 320 do not match, the MIB is not updated.

On the other hand, in the present embodiment, only when the bit value (contents of the parameter implied by the bit) changes among the bit streams having the definition of the same system information, the MIB contents are considered to be changed, and the SI update procedure is executed. Therefore, even when the spare bits 500 are used for the plurality of purposes (definitions), the MIB can be reliably updated.

(5) Other Embodiments

The present invention has been explained in detail using the above mentioned embodiments; however, it is self-evident to a person skilled in the art that the present invention is not limited to the embodiments explained herein and that the embodiments can be modified or improved in various ways.

For example, in the embodiment explained above, even if a configuration in which a total of 20 bits of information becomes available for utilization by repeatedly transmitting the spare bits 500 of the definition 1 and the spare bits 500 of the definition 2 is mainly cited as an example, definition per frame (the predetermined cycle) can be increased thereby extending the information up to information of 30 bits or more. In other words, by setting the number of definitions to N, 10 x N bits of the spare bits 500 become available for utilization.

In the embodiment explained above, even if a configuration in which the number of spare bits is 10 bits is cited as an example, the number of spare bits can be less than 10 bits (for example, 5 bits). Furthermore, as an example of that the number of spare bits is decreased as explained above, it is considered that a part of the spare bits can be used for other purposes (for example, for scheduling information of the SIB1) .

In such a case, for example, for the UEs of the specifications stipulated in LTE Rel-14 or later that do not support eMTC (BLUE UE or UE in CE (Coverage Enhancement) mode) specified in LTE Rel-13, the above process is executed by setting the number of spare bits to 10 bits, and for the UEs of the specifications stipulated in the LTE Rel-14 or later that support the eMTC specified in the LTE Rel-13, the above process can be executed by setting the number of spare bits to 5 bits.

In the embodiment explained above, even if the MIB is cited as an example, the present invention can also be applied to other system information when the spare bits 500 having the same configuration as the MIB are included in the system information.

Moreover, spare bits of the MIB can be expressed as predetermined bits, extended bits, surplus bits, and the like.

Furthermore, the order of processes in the sequences, flow charts, and the like in the embodiment explained above can be reshuffled as long as the order is kept consistent across sequences and flows.

Moreover, the terminology explained in the present description and / or the terminology necessary for understanding the present description can be replaced with the terminology having the same or similar meanings. For example, terms "channel" and / or "symbol" can be replaced with the term "signal" . Moreover, the term "signal" can be replaced with the term "message". Furthermore, the terms "system" and "network" can be used interchangeably.

Furthermore, the parameters and the like explained above can be represented by absolute values, can be expressed as relative values with respect to the predetermined values, or can be represented by any other corresponding information. For example, a radio resource can be indicated by an index.

The eNB 100 (a base station) can accommodate one or more (for example, three) cells (also called sectors) . When the base station accommodates more than one cells, the entire coverage area of the base station can be divided into a plurality of smaller areas, and each of the smaller areas can provide communication services via a base station subsystem (for example, small type indoor base station RRH: Remote Radio Head) .

The term "cell" or "sector" refers to a base station that executes communication service in this coverage and / or a part or the entire of the coverage area of the base station subsystem. Furthermore, the terms "base station", "eNB", "cell", and "sector" can be used interchangeably in the present description. The base station is also referred to as a fixed station, Node B, eNodeB (eNB), an access point, a femto cell, a small cell, and the like.

The UE 200 is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, depending on a person skilled in the art.

The phrase "based on" used in the present description does not mean "based only on" unless specified particularly. It can also be interpreted that the phrase "based on" means both "based only on" and "based at least on".

Furthermore, the terms "including", "comprising", and various forms thereof are intended to be inclusive, similar to "equipped with". Furthermore, the term "or" used in the present description or in the claims does not intend to indicate an exclusive disjunction.

Any reference to an element using a designation such as "first", "second", and the like used in the present description generally does not limit the amount or order of those elements. Such designations can be used in the present description as a convenient way to distinguish between two or more elements. Thus, the reference to the first and second elements does not imply that only two elements can be adopted, or that the first element must precede the second element in some or the other manner.

Throughout the present description, for example, during translation, if articles such as a, an, and the in English are added, these articles shall include plurality, unless it is clearly indicated that it is not so according to the context.

The present invention can be expressed as below. According to one aspect of the present invention, a user device (UE 200) that performs radio communication with a radio base station (eNB 100) based on notification information (MIB) transmitted from the radio base station, the user device includes, a notification information receiving unit (MIB receiving unit 210) that receives the notification information repeatedly transmitted from the radio base station at a predetermined cycle (40 ms); and a notification information determining unit (notification information determining unit 230) that determines contents of the notification information received by the notification information receiving unit. The notification information includes a first frame (frame 310) having a plurality of first slots (slots 410) to which system information of a same type used to perform the radio communication is assigned, and a second frame (frame 320) that is transmitted after the first frame and has a plurality of second slots (slots 420) to which the system information is assigned. The first frame and the second frame are transmitted at the predetermined cycle, and the system information includes a predetermined number (10 bits) of spare bits (spare bits 500). The spare bits assigned to the first slot are used for a first purpose (for example, system information for MTC-UE), and the spare bits assigned to the second slot are used for a second purpose (for example, system information related to extended DRX cycle) that is different from the first purpose. The notification information determining unit determines contents of the spare bits assigned to the first slot and the contents of the spare bits assigned to the second slot.

In the above aspect of the present invention, the notification information determining unit can determine, even if the contents of the system information included in the first slot and the contents of the system information included in the second slot are different, that the notification information is not updated.

In the above aspect of the present invention, the notification information determining unit can determine, when the contents of the system information included in the plurality of the first slots that constitute the same first frame, or in the plurality of the second slots that constitute the same second frame are changed, that the system information has been updated.

According to another aspect of the present invention, a radio base station that transmits to a user device notification information repeatedly transmitted at a predetermined cycle includes, a notification information transmitting unit (MIB transmitting unit 120) that transmits to the user device the notification information. The notification information includes a first frame having a plurality of first slots to which system information of a same type used to perform radio communication is assigned, and a second frame that is transmitted after the first frame and has a plurality of second slots to which the system information is assigned. The first frame and the second frame are transmitted at the predetermined cycle, and the system information includes a predetermined number of spare bits. The spare bits assigned to the first slot are used for a first purpose, and the spare bits assigned to the second slot are used for a second purpose that is different from the first purpose.

According to still another aspect of the present invention, a radio communication method used in a radio communication system that includes a user device and a radio base station includes, transmitting in which the radio base station repeatedly transmits notification information at a predetermined cycle; and receiving in which the user device receives the notification information. The notification information includes a first frame having a plurality of first slots to which system information of a same type used to perform radio communication is assigned, and a second frame that is transmitted after the first frame, and has a plurality of second slots to which the system information has been assigned. The first frame and the second frame are transmitted at the predetermined cycle, and the system information includes a predetermined number of spare bits. The spare bits assigned to the first slot are used for a first purpose, and the spare bits assigned to the second slot are used for a second purpose which is different from the first purpose.

As described above, the details of the present invention have been disclosed by using the embodiment of the present invention. However, the description and drawings which constitute part of this disclosure should not be interpreted so as to limit the present invention. From this disclosure, various alternative embodiments, examples, and operation techniques will be easily apparent to a person skilled in the art.

The entire contents of Japanese Patent Application 2015-217959 (filed on November 5, 2015) are incorporated in the description of the present application by reference.

INDUSTRIAL APPLICABILITY

According to the user device, the radio base station, and the radio communication method explained above, the predetermined number of spare bits included in notification information such as the MIB can be extended to be utilized for the plurality of purposes.

EXPLANATION OF REFERENCE NUMERALS

10 radio communication system
20 radio access network
100 eNB
110 notification information determining unit
120 MIB transmitting unit
130 SIB transmitting unit
200 UE
210 MIB receiving unit
220 SIB receiving unit
230 notification information determining unit
240 RRC connection processing unit
300, 300 PMIB
310, 320 frame
410, 420 slot

500 spare bit

**Claims**

1. A user device that performs radio communication with a radio base station based on notification information transmitted from the radio base station, the user device comprising:

   a notification information receiving unit that receives the notification information repeatedly transmitted from the radio base station at a predetermined cycle; and
   a notification information determining unit that determines contents of the notification information received by the notification information receiving unit, wherein
   the notification information includes

   a first frame having a plurality of first slots to which system information of a same type used to perform the radio communication is assigned; and
   a second frame that is transmitted after the first frame and has a plurality of second slots to which the system information is assigned, wherein
   the first frame and the second frame are transmitted at the predetermined cycle, and
   the system information includes a predetermined number of spare bits, wherein

   the spare bits assigned to the first slot are used for a first purpose, and
   the spare bits assigned to the second slot are used for a second purpose that is different from the first purpose, and

   the notification information determining unit determines contents of the spare bits assigned to the first slot and the contents of the spare bits assigned to the second slot.

2. The user device as claimed in Claim 1, wherein even if the contents of the system information included in the first slot and the contents of the system information included in the second slot are different, the notification information determining unit determines that the notification information is not updated.

3. The user device as claimed in Claim 1, wherein when the contents of the system information included in the plurality of the first slots that constitute the same first frame, or in the plurality of the second slots that constitute the same second frame are changed, the notification information determining unit determines that the system information has been updated.

4. A radio base station that transmits to a user device notification information repeatedly transmitted at a predetermined cycle, the radio base station comprising:

   a notification information transmitting unit that transmits to the user device the notification information, wherein
   the notification information includes

   a first frame having a plurality of first slots to which system information of a same type used to perform radio communication is assigned; and
   a second frame that is transmitted after the first frame and has a plurality of second slots to which the system information is assigned, wherein,
   the first frame and the second frame are transmitted at the predetermined cycle, and

   the system information includes a predetermined number of spare bits, wherein

   the spare bits assigned to the first slot are used for a first purpose, and
   the spare bits assigned to the second slot are used for a second purpose that is different from the first purpose.

5. A radio communication method used in a radio communication system that includes a user device and a radio base station, the radio communication method comprising:

   transmitting in which the radio base station repeatedly transmits notification information at a predetermined cycle; and
   receiving in which the user device receives the notification information, wherein
   the notification information includes

   a first frame having a plurality of first slots to which system information of a same type used to perform radio communication is assigned; and
   a second frame that is transmitted after the first frame, and has a plurality of second slots to which the system information has been assigned, wherein
   the first frame and the second frame are transmitted at the predetermined cycle, and
   the system information includes a predetermined number of spare bits, wherein

   the spare bits assigned to the first slot are used for a first purpose, and
   the spare bits assigned to the second

**EP 3 373 644 A1**

slot are used for a second purpose which is different from the first purpose.

FIG. 1

10

20

RADIO ACCESS NETWORK

eNB ～100

200

UE

200

UE

- - - - -

FIG. 2

# FIG. 3

200

210

MIB RECEIVING UNIT

230

NOTIFICATION INFORMATION DETERMINING UNIT

SIB RECEIVING UNIT

220

240

RRC CONNECTION PROCESSING UNIT

RADIO COMMUNICATION MODULE

MEMORY

PROCESSOR

FUNCTIONAL MODULE

DISPLAY

POWER SUPPLY

# FIG. 4

# FIG. 5

## — *MasterInformationBlock*

The MasterInformationBlock includes the system information transmitted on BCH.

Signalling radio bearer: N/A

RLC-SAP: TM

Logical channel: BCCH

Direction: E-UTRAN to UE

*MasterInformationBlock*

```
-- ASN1START
MasterInformationBlock ::=           SEQUENCE {
d1-Bandwidth                        ENUMERATED {
                                     n6, n15, n25, n50, n75, n100},

phich-Config                        PHICH-Config,
SystemFrameNumber                    BIT STRING(SIZE (8)),
   spare                             BIT STRING(SIZE (10))
}
-- ASN1STOP
```

# FIG. 6

(a)

BIT STREAM DEFINITION 1
:00000 00001

BIT STREAM DEFINITION 2
:01000 00001

300

310

320

40msec

40msec

410

10msec

420

| S(1) | S(2) | S(3) | S(4) | S(1) | S(2) | S(3) | S(4) |
|------|------|------|------|------|------|------|------|
| $d_{PBCH}$ | $d_{PBCH}$ | $d_{PBCH}$ | $d_{PBCH}$ | $d_{PBCH}$ | $d_{PBCH}$ | $d_{PBCH}$ | $d_{PBCH}$ |

500

...

t

(b)

BIT STREAM DEFINITION 1
:00000 00001

BIT STREAM DEFINITION 1
:00000 00001

300P

40msec

40msec

10msec

| S(1) | S(2) | S(3) | S(4) | S(1) | S(2) | S(3) | S(4) |
|------|------|------|------|------|------|------|------|
| $d_{PBCH}$ | $d_{PBCH}$ | $d_{PBCH}$ | $d_{PBCH}$ | $d_{PBCH}$ | $d_{PBCH}$ | $d_{PBCH}$ | $d_{PBCH}$ |

...

t

EP 3 373 644 A1

## INTERNATIONAL SEARCH REPORT

International application No.

PCT/JP2016/082654

### A.    CLASSIFICATION OF SUBJECT MATTER
*H04W28/06*(2009.01)i

According to International Patent Classification (IPC) or to both national classification and IPC

### B.    FIELDS SEARCHED

Minimum documentation searched (classification system followed by classification symbols)
H04W4/00-99/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| X<br>A | Research In Motion, UK Limited, TDD UL/DL reconfiguration signalling methods, 3GPP TSG-RAN WG1 #72bis R1-131353, 3GPP, 2013.04.19, section 2.2 | 1,3-5<br>2 |
| A | JP 2015-156542 A  (Sharp Corp.),<br>27 August 2015 (27.08.2015),<br>paragraph [0036]<br>(Family: none) | 1-5 |
| P,X | NTT DOCOMO, INC, Increasing capacity of MIB spare bits, 3GPP TSG-RAN WG2 #92 R2-156523, 3GPP, 2015.11.20 | 1-5 |

☐    Further documents are listed in the continuation of Box C.          ☐    See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 November 2016 (22.11.16) | 06 December 2016 (06.12.16) |

| Name and mailing address of the ISA/<br>    Japan Patent Office<br>    3-4-3,Kasumigaseki,Chiyoda-ku,<br>    Tokyo 100-8915,Japan | Authorized officer |
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015217959 A

**Non-patent literature cited in the description**

- **3GPP.** Further LTE Physical Layer Enhancements for MTC. *3GPP RP-150492,* March 2015

- **3GPP.** MIB for Rel-13 low complexity and coverage enhanced UEs. *3GPP R2-154785,* October 2015